## Europäisches Patentamt

## European Patent Office

## Office européen des brevets

(11) Numéro de publication: **0 086 722**
**B1**

(12) # FASCICULE DE BREVET EUROPÉEN

(45) Date de publication du fascicule du brevet:
**03.09.86**

(21) Numéro de dépôt: **83400306.3**

(22) Date de dépôt: **14.02.83**

(51) Int. Cl.⁴: **B 01 D 35/22,** B 01 D 29/10,
B 01 D 29/42

(54) **Filtre à crépine fixe en particulier pour eaux industrielles.**

(30) Priorité: **15.02.82 FR 8202416**

(43) Date de publication de la demande:
**24.08.83 Bulletin 83/34**

(45) Mention de la délivrance du brevet:
**03.09.86 Bulletin 86/36**

(84) Etats contractants désignés:
**AT BE CH DE GB IT LI LU NL SE**

(56) Documents cité:
**FR-A-685 497
GB-A-1 225 286
GB-A-2 055 302
GB-A-2 070 956
US-A-3 363 771**

(73) Titulaire: **E. BEAUDREY & Cie., 14 Bd. Ornano,
F-75018 Paris (FR)**

(72) Inventeur: **Jackson, Philip, 15 Rue Las Cases,
F-75007 Paris (FR)**

(74) Mandataire: **CABINET BONNET- THIRION, 95
Boulevard Beaumarchais, F-75003 Paris (FR)**

LIBER, STOCKHOLM 1986

## Description

La présente invention concerne, d'une manière générale, les filtres qui couramment mis en oeuvre pour la filtration d'eaux industriells, et notamment d'eau de circulation destinée à la réfrigération de quelconques installations, condenseurs de turbine à vapeur par exemple, sont destinés à retenir, outre de quelconques débris inertes, des organismes, tels que coquillages ou algues, susceptibles de proliférer en aval dans les installations desservies, au préjudice du fonctionnement de celles-ci s'ils n'étaient pas préalablement éliminés.

Elle vise plus particulièrement ceux de ces filtres qui comportent un corps de filtre globalement cylindrique, à tubulure d'entrée latérale droite et tubulure de sortie axiale, et une crépine fixe, qui, disposée dans ledit corps de filtre, est interposée entre la tubulure d'entrée et la tubulure de sortie de celui-ci.

Par tubulure d'entrée latérale droite, on entend ici une tubulure d'entrée qui, se raccordant à la paroi latérale du corps de filtre, s'étend sensiblement perpendiculairement à l'axe de celui-ci, et, par tubulure de sortie axiale, une tubulure de sortie qui, se raccordant à l'un des fonds transversaux du corps de filtre, s'étend, sinon suivant l'axe de celui-ci, au moins parallèlement à cet axe.

L'un des problèmes à résoudre dans la réalisation des filtres de ce type est d'en éviter en service le colmatage de la crépine.

Dans le brevet allemand n° 2.225.726, il est proposé de disposer, à cet effet, dans la tubulure d'entrée, une vanne du type vanne papillon, et, pour faciliter l'implantation de celle-ci, semble-t-il, il est suggéré une excentration de la crépine fixe dans le corps de filtre suivant l'axe de la dite tubulure d'entrée.

En inclinant cette vanne papillon dans la tubulure d'entrée, il est possible, au moins théoriquement, d'assurer un lavage de la crépine lorsque les débris ont tendance à s'y accumuler.

Mais il en résulte des turbulences au sein de la veine fluide correspondante, se traduisant par un désordre momentané du débit et une perturbation non négligeable du circuit en aval.

En outre, le lavage de la crépine se fait à la demande alors que celle-ci est déjà au moins en partie colmatée ou en cours de colmatage.

Dans le brevet français déposé le 22 Juin 1976 sous le n° 76 18883 et publié sous le n° 2.355.544, il a au contraire été proposé une disposition permettant d'éviter systematiquement un tel colmatage.

Suivant cette disposition, qui se caractérise par une conjonction d'une inclinaison de la tubulure d'entrée et d'un profil en colimaçon de la paroi latérale du corps de filtre, ou, d'une manière plus générale, d'un écoulement de section progressivement décroissante, depuis la tubulure d'entrée jusqu'à la zone de récupération de débris, entre ladite paroi latérale du corps de filtre et la crépine fixe, il est assuré un balayage systématique de cette crépine fixe par le flux entrant, en sorte que les débris et organismes divers véhiculés par ce dernier sont empêchés de se déposer sur ladite crépine, et, entraînés par ledit flux, se dirigent vers la zone de récupération de débris, dont ils sont périodiquement éliminés par purge de celle-ci.

Bien qu'une telle disposition ait donné et puisse encore donner satisfaction, notamment en raison de son efficacité et de sa simplicité, aussi bien qu'en raison du fait qu'elle permet de maintenir en permanence le débit nominal du filtre sans perturbation de celui-ci par un quelconque organe mobile et sans perte de débit, elle présente, pour la construction du filtre, des inconvenients, dus à la configuration dissymétrique de celui-ci.

Il s'avère en effet nécessaire, dans la pratique, de contrebuter par des renforts extérieurs le corps de filtre, tant sur sa paroi latérale en colimaçon que sur les fonds fermant celle-ci.

Le coût de l'ensemble s'en trouve alourdi.

La présente invention a d'une manière générale pour objet une disposition permettant d'éviter cet inconvénient tout en conservant l'avantage d'un balayage systématique de la crépine et conduisant en outre à d'autres avantages.

De manière plus précise, la présente invention a pour objet un filtre pour eaux industrielles, du genre comportant un corps de filtre globalement cylindrique, à tubulure d'entrée se raccordant à la paroi latérale du corps de filtre, perpendiculairement à l'axe de celui-ci, et tubulure de sortie axiale, et une crépine fixe, qui, disposée dans ledit corps de filtre, entre la tubulure d'entrée et la tubulure de sortie, est globalement excentrée suivant l'axe de ladite tubulure d'entrée, ce filtre étant caractérisé en ce que, conjointement, d'une part, entre la crépine fixe et le corps de filtre, son espace interne est diamétralement partagé en deux volumes distincts, suivant le plan axial du corps de filtre contenant l'axe de la tubulure d'entrée et l'axe de la crépine, chacun desdits volumes s'étendant respectivement de part et d'autre de la crépine fixe, de la tubulure d'entrée à des zones de récupération de débris diamétralement opposées à la tubulure d'entrée, et d'autre part, dans la crépine fixe, s'étant diamétralement, suivant ce même plan axial, un voile.

Autrement dit, tout se passe comme si le filtre suivant l'invention était formé de deux demi-filtres globalement hemi-cylindriques accolés l'un à l'autre suivant un même plan diamétral.

La présents invention est en effet fondée sur l'observation, relativement surprenante à première vue, que, pour l'efficacité du balayage systématique recherché pour la crépine en vue d'en éviter le colmatage, il n'était pas nécessaire que ce balayage s'étende sur sensiblement 360°, mais que, au contraire, il était possible d'obtenir un fonctionnement satisfaisant avec un balayage limité sur moins de 180°.

En effet, du fait que la tubulure d'entrée du filtre est droite, le flux entrant est partagé selon l'invention en deux flux partiels égaux, et chacun de leur côté, ces flux partiels contournent la crépins fixe, avec, d'une part, un rapprochement progressif de celle-ci assurant une répartition uniforme des vitesses et donc une alimentation régulière de cette crépine sur sa demi-surface correspondante, et d'autre part un balayage de la surface de cette crépine s'opposant comme précédemment et avec la même efficacité, au dépôt sur celle-ci des débris et organismes véhiculés et assurant leur entraînement en direction de la zone de récupération de débris correspondante.

La construction du corps de filtre, qui est dès lors avantageusement symétrique, s'en trouve simplifiée.

S'agissant, notamment, de la réalisation suivant un profil en colimaçon de la paroi latérale de ce corps de filtre, et compte tenu de ce que, pour chaque demi-filtre en cause cette paroi ne s'étend que sur moins de 180°, il est en effet avantageusement possible de se satisfaire, en première approximation, d'une excentration appropriée de la crépine fixe dans le corps de filtre, la portion de la paroi latérale de celui-ci correspondant à un tel demi-filtre pouvant alors très simplement avoir une configuration hémicylindrique, suivant un seul arc de cercle, alors que, lorsqu'un tel profil en colimaçon s'étend sur sensiblement 360°, il est normalement nécessaire, pour en réaliser une approche suivant la même approximation, de mettre en oeuvre trois arcs de cercle successifs de rayons différents.

Bien entendu, si désiré, pour affiner l'approche du profil en colimaçon recherché, la réalisation de chacune des portions de la paroi latérale du corps de filtre correspondant à un demi-filtre peut se faire par mise en oeuvre d'au moins deux arcs de cercle successifs, voire même réellement en spirale.

En pratique, suivant une forme préférée de réalisation, le partage en deux volumes distincts de l'espace interne du filtre suivant l'invention est assuré, du côté de la tubulure d'entrée, par un élément directionnel comportant deux aubages, qui, jointifs du côté de ladite tubulure d'entrée s'écartent l'un de l'autre du côté de la crépine, de part et d'autre du plan axial du corps de filtre contenant l'axe de la tubulure d'entrée, en recréant ainsi les conditions d'une entrée tangentielle du flux à traiter; conjointement, du côté opposé à celle-ci, ce partage est assuré par un organe séparateur disposé suivant ledit plan et constitué soit par un simple flasque, soit par un élément directionnel à aubages du même type que le précédent.

Cet élément directionnel at cet organe séparateur, qui, suivant un développement de l'invention, sont reliés l'un à l'autre par un voile diamétral dans la crépine fixe, s'étendent avantageusement l'un et l'autre d'un des deux fonds du corps de filtre à l'autre.

Ils constituent ainsi avantageusement pour ces fonds des éléments de renfort, de nature à permettre de s'affranchir de tout renfort extérieur pour ceux-ci.

De mêms, si désiré, l'espace interne du filtre, entre la crépine fixe st le corps de filtre, peut être partagé, suivant l'axe du corps de filtre, en au moins deux compartiments distincts, par uns cloison interne perpendiculairement audit axe, qui renforce avantageusement de l'intérieur la paroi latérale dudit corps de filtre, et qui, concourant à l'obtention d'une distribution homogène pour le flux entrant, facilite le traitement de celui-ci aussi bien que la décharge des débris ou organismes divers qui doivent en être retirés.

Corollairement, compte tenu de la brièveté de la trajectoire de ce flux dans le filtre suivant l'invention, qui ne s'étend que sur sensiblement 180°, l'efficacité des purges périodiquement appliquées aux zones de récupération de débris pour en retirer les débris et organismes divers qui s'y sont accumulés est avantageusement accrue.

Enfin, la tubulure d'entrés étant droite, l'encombrement hors tout du filtre suivant l'invention est avantageusement réduit, notamment en ce qui concerne la distance séparant de l'axe de la crépine fixe le plan de la bride de fixation usuellement prévue à l'extrémité libre de cette tubulure d'entrée.

Les caractéristiquss et avantages de l'invention ressortiront d'ailleurs de la description qui va suivre, à titre d'exemple, en référence aux dessins schématiques annexés sur lesquels:

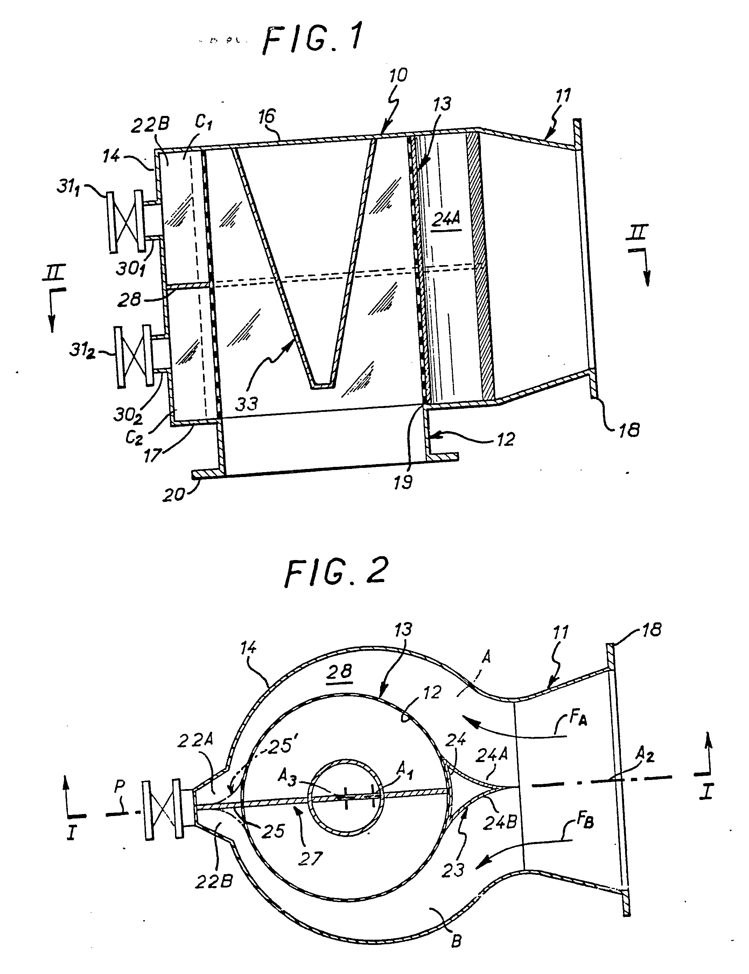

la figure 1 est une vue en coupe axiale d'un filtre suivant l'invention, suivant la ligne I-I de la figure 2; la figure 2 en est une vue en coupe transversale, suivant la ligne II-II de la figure 1.

Tel qu'illustré sur ces figures, et de manière connue en soi, le filtre suivant l'invention, qui est destiné notamment à la filtration d'eaux industrielles, comporte un corps de filtre 10, globalement cylindrique, à tubulure d'entrée 11 et tubulure de sortie 12, et une crépine fixe 13, qui, disposée dans ledit corps de filtre 10, est interposée entre la tubulure d'entrée 11 et la tubulure de sortie 12.

Le corps de filtre 10 est formé d'une paroi latérale cylindrique 14, et de deux fonds 16, 17 établis transversalement aux extrémités axiales de celle-ci.

Dans la forme de réalisation représentée, et pour simplification du dessin, le contour de la paroi latérale cylindrique 14 du corps de filtre 10 est circulaire.

A la figure 2, on a schématisé par sa trace A1 l'axe de cette paroi latérale cylindrique 14.

La tubulure d'entrée 11 est latérale, c'est-à-dire qu'elle se raccorde à la paroi latérale 14 du corps de filtre 10, et elle est droite, c'est-à-dire que son axe A2, schématisé en traits interrompus sur la figure 2, est perpendiculaire à l'axe A1 de celle-ci. Aurement dit, elle se raccorde à la paroi latérale 14 du corps de filtre 10 perpendiculairement à l'axe de celui-ci.

A son extrémité libre, la tubulure d'entrée 11 est, de manière connue en soi, dotée radialement en saillie d'une bride transversale de fixation 18.

De préférence, au droit de son raccordement avec la paroi latérale cylindrique 14 du corps de filtre 10, elle a une section quadrangulaire.

Conjointement, au droit de sa bride de fixation 18, elle a par exemple une section circulaire ou polygonale.

De manière connue en soi, elle est conformée de manière à permettre un raccordement approprié entre de telles sections de contours différent.

Corollairement, la tubulure de sortie 12, qui s'étend à compter d'une ouverture 19 du fond 17 du corps de filtre 10, suivant un contour circulaire, est axiale, c'est-à-dire que son axe A3, schématisé par sa trace sur la figure 2, est parallèle à l'axe A1 de la paroi latérale 14 dudit corps de filtre 10.

Comme la tubulure d'entrée 11, la tubulure de sortie 12 est radialement munie, à son extrémité libre, d'une bride transversale de fixation 20.

La crépine fixe 13 s'étend axialement dans le corps de filtre 10, d'un des fonds 16, 17 de celui-ci à l'autre, suivant un contour circulaire, et la tubulure de sortie 12 est dans son prolongement.

L'axe de cette crépine fixe 13 est donc confondu avec celui A3 de la tubulure de sortie 12.

En pratique, et tel que représenté, la crépine fixe 13 est globalement excentrée dans le corps de filtre 10, suivant l'axe A2 de la tubulure d'entrée 11, son axe A3 étant plus éloigné de ladite tubulure d'entrée 11 que l'axe A1 de la paroi latérale 14 de ce corps de filtre 10.

Suivant l'invention, l'espace interne du filtre, entre la crépine fixe 13 et le corps de filtre 10, est diamétralement partagé en deux volumes distincts A, B, suivant le plan axial P de corps de filtre 10 contenant l'axe A2 de la tubulure d'entrée 11 et celui, A3, de ladite crépine fixe 13, et, d'autre part, dans la crépine fixe 13, s'étand, diamétralement, suivant ce même plan axial P, un voile 27.

Ce plan diamétral P est schématisé en traits interrompus sur la figure 2, et il se confond sur celle-ci avec l'axe A2 de la tubulure d'entrée 11.

Les volumes A, B s'étendent, de part et d'autre de la crépine fixe 13, de la tubulure d'entrée 11 à une zone de récupératien de débris individuelle 22A, 22B diamétralement opposée à celle-ci.

Dans la forme de réalisation représentée, les zones de récupération de débris 22A, 22B sont en saillie sur la paroi latérale 14 du corps de filtre 10, suivant, transversalement, une section en trapèze qui leur est commune, et elles s'étendent axialement sur toute la hauteur de ladite paroi latérale 14.

En pratique, et tel que représenté, du côté de la tubulure d'entrée 11, le partage en deux volumes distincts A, B de l'espace interne du filtre est assuré par un élément directionnel 23 comportant deux aubages 24A, 24B, qui, jointifs du côté de ladite tubulure d'entrée, de préférence tangentiellement l'un à l'autre, tel que représenté, s'écartent en arrondi l'un de l'autre du côté de la crépine fixe 13, de part et d'autre du plan axial P.

Dans la forme de réalisation représentée, du côté de la crépine fixe 13, les aubages 24A, 24B de l'élément directionnel 23 sont reliés l'un à l'autre par un voile 24, au contour de ladite crépine fixe 13, en sorte que la section droite de l'élément directionnel 23 est globalement un triangle curviligne, et, au raccordement de la tubulure d'entrée 11 à la paroi latérale 14 du corps de filtre 10, une configuration complémentaire de celle desdits aubages 24A, 24B est prévue pour ladite paroi latérale 14.

Du côté opposé à l'entrée de la tubulure 11, le partage en deux volumes distincts A, B de l'espace interne du filtre est assuré par un organe séparateur disposé suivant le plan axial P du corps de filtre 10.

Dans la forme de réalisation représentée en trait plein sur la figure 2, il s'agit d'un simple flasque 25 qui s'étend diamétralement de la crépine fixe 13 au fond des zones de récupération de débris 22A, 22B.

Quoi qu'il en soit, cet élément directionnel 23 et ce flasque 25 s'étendent axialement l'un et l'autre d'un des deux fonds 16, 17 du corps de filtre 10 à l'autre.

Par ailleurs, dans la forme de réalisation représentée, l'espace interne du filtre, entre la crépine fixe 13 et le corps de filtre 10, est, suivant l'axe A1 de ce corps de filtre 10, partagé en deux compartiments C1, C2 par une cloison interne 28 perpendiculaire audit axe.

Pour chacun de ces compartiments C1, C2, une même conduite $30_1$, $30_2$, contrôlée par une vanne $31_1$, $31_2$, est prévue pour l'une et l'autre des zones de récupération de débris 22A, 22B, pour purge de celles-ci.

Enfin, dans la forme de réalisation représentée, un déflecteur globalement tronconique 33 est disposé axialement dans la crépine fixe 13, la section de ce déflecteur tronconique 33 allant progressivement en décroissant en direction de la tubulure de sortie 12.

En pratique, et tel que représenté, à son extrémité opposée à la tubulure de sortie 12, le déflecteur 33 a une section inférieure à celle de la crépine fixe 13.

Les modalités constructives du filtre ainsi constitué, qui n'a été que schématiquement représenté sur les figures, relèvent de l'homme de l'art, et elles ne seront pas décrites plus en détail ici; elles se trouvent facilitées par la configuration symétrique du filtre.

Tel qu'illustré par les flèches FA, FB à la figure 2, le flux qui y pénètre par la tubulure d'entrée 11, se partage de manière symétrique en deux flux partiels égaux, de part et d'autre du plan axial P de l'ensemble, et chacun de ces flux partiels balaye circonférentiellement la demi-surface correspondante de la crépine fixe 13, tout en traversant progressivement celle-ci, en sorte que les débris ou organismes divers qu'il véhicule, empêchés de se déposer sur cette crépine fixe 13, se rassemblent dans la zone de récupération de debris 22A, 22B correspondante, d'où ils sont périodiquement évacués, par purge de celle-ci par les conduites 30₁, 30₂.

Bien entendu, la présente invention ne se limite pas à .a forme de réalisation décrite et représentée, mais englobe toute variante d'exécution.

Par exemple on ne sortirait pas du cadre de la présente invention en rendant communes les deux zones de récupération de débris prévues.

En outre, le nombre de cloisons internes est quelconque; la forme du déflecteur 33 pourra faire l'objet de diverses variantes, de même que les détails de réalisation de l'élément directionnel 23.

De plus, tel que schématisé en traits interrompus à la figure 2, l'organe séparateur disposé du côté oppose à la tubulure d'entrée, au lieu d'un simple flasque, peut être constitué par un élément directionnel 25' à aubages du type de l'élément directionnel 23, c'est-à-dire par un élément directionnel comportant deux aubages, qui jointifs du côté opposé à la tubulure d'entrée, s'écartent l'un de l'autre du côté de la crépine, de part et d'autre du plan axial du corps de filtre contenant l'axe de ladite tubulure d'entrée.

De manière générale, l'organisation de l'ensemble du filtre en deux parties symétriques de part et d'autre d'un plan avantageusement matérialisé dans l'exemple décrit par le voile de raidissement 27, est de nature à faciliter notablement la construction, surtout dans le cas d'installations de dimensions importantes.

En outre, et ainsi qu'on l'aura noté, le filtre suivant l'invention est avantageusement un filtre entièrement statique, aucun déplacement d'un quelconque organe monté à cet effet mobile entre au moins deux positions distinctes n'étant en effet nécessaire pour en assurer le décolmatage, puisque, par construction, tout colmatage en est systématiquement évité en service, avec tous les avantages qui en résultent, tels qu'explicités dans le brevet français n° 2.355.544. mentionné ci-dessus, et tels que succinctement rappelés precedemment.

**Revendications**

1. Filtre pour eaux industrielles, du genre comportant un corps de filtre globalement cylindrique, à tubulure d'entrée se raccordant à la paroi latérale du corps de filtre, perpendiculairement à l'axe de celui-ci, et tubulure de sortie axiale, et une crépine fixe, qui, disposée dans ledit corps de filtre, entre la tubulure d'entrée et la tubulure de sortie, est globalement excentrée suivant l'axe de ladite tubulure d'entrée, caractérisé en ce que, conjointement, d'une part, entre la crépine fixe (13) et le corps de filtre (10), son espace interne est diamétralement partagé en deux volumes distincts (A, B) suivant le plan axial (P) du corps de filtre contenant l'axe (A2) de la tubulure d'entrée (11) et l'axe (A3) de la crépine fixe, chacun desdits volumes (A, B) s'étendant respectivement de part et d'autre de la crépine fixe (13), de la tubulure d'entrée (11) à des zones de récupération de débris (22A, 22B) diamétralement opposées à la tubulure d'entrée (11), et, d'autre part, dans la crépine fixe (13), s'étend diamétralement, suivant ce même plan axial (P), un voile (27).

2. Filtre suivant la revendication 1, caractérisé en ce que, du côté de la tubulure d'entrée (11), le partage en deux volumes distincts (A, B) de l'espace interne du filtre est assuré par un élément directionnel (23) comportant deux aubages (24A, 24B), qui, jointifs du côté de ladite tubulure d' entrée (11), s'écartent l'un de l'autre du côté de la crépine fixe (13), de part et d'autre du plan axial (P) du corps de filtre (10) contenant l'axe (A2) de la tubulure d'entrée (11) et celui (A3) de la crépine fixe (13).

3. Filtre suivant l'une quelconque des revendications 1, 2, caractérisé en ce que, du côté opposé à la tubulure d'entrée (11), le partage en deux volumes distincts (A, B) de l'espace interne du filtre est assuré par un organe séparateur (25, 25') disposé suivant le plan axial (P) du corps de filtre (10) contenant l'axe (A2) de la tubulure d'entrée (11) et celui (A3) de la crépine fixe (13).

4. Filtre suivant les revendications 2, 3, prises conjointement, caractérisé en ce que, le corps de filtre (10) comportant une paroi latérale (14) et deux fonds (16, 17) l'élément directionnel (23) et l'organe séparateur (25, 25') partageant en deux volumes distincts (A, B) l'espace interne du filtre s'étendent l'un et l'autre d'un desdits fonds (16, 17) à l'autre.

5. Filtre suivant l'une quelconque des revendications 2 à 4, caractérisé en ce que l'organe séparateur est un simple flasque (25).

6. Filtre suivant l'une quelconque des revendications 2 à 4, caractérisé en ce que l'organe séparateur est un élément directionnel (25') comportant deux aubages, qui, jointifs du côté opposé à la tubulure d'entrée (11), s'écartent l'un de l'autre du côté de la crépine fixe (13), de part et d'autre du plan axial (P) du corps de filtre (10) contenant l'axe (A2) de ladite tubulure d'entrée (11) et celui (A3) de ladite crépine fixe (13).

7. Filtre suivant l'une quelconque des revendications 1 à 6, caractérisé en ce que, pour chacun des volumes distincts (A,B) qu'il comporte, la zone de récupération de débris (22A, 22B) est en saillie sur la paroi latérale (14) du corps de filtre (10).

8. Filtre suivant l'une quelconque des revendications 1 à 7, caractérisé en ce qu'une même conduite de décharge (30) est prévue pour l'une et l'autre des zones de récupération de débris (22A, 22B) des deux volumes distincts (A, B) qu'il comporte.

9. Filtre suivant l'une quelconque des revendications 1 à 6, dans la crépine fixe (13) duquel est axialement disposé un déflecteur (33) globalement tronconique de section progressivement décroissante en direction de la tubulure de sortie (12), caractérisé en ce que, à son extrémité opposée à la tubulure de sortie (12), ledit déflecteur (33) a une section inférieure à celle de la crépine fixe (13).

10. Filtre suivant l'une quelconque des revendications 1 à 9, caractérisé en ce que, suivant l'axe (A1) du corps de filtre (10), son espace interne, entre la crépine fixe (13) et ledit corps de filtre (10), est partagé en au moins deux compartiments (C1, C2) par une cloison interne (28) perpendiculaire audit axe (A1).

## Patentansprüche

1. Filter für Industriewässer, der Bauart mit einem im wesentlichen zylindrischen Filterkörper mit Eintrittsstutzen, der mit der Seitenwandung des Körpers senkrecht zu dessen Achse verbunden ist und einem axialen Austrittsstutzen sowie einem festen Siebfilter, das, in diesem Filterkörper zwischen dem Eintrittsstutzen und dem Austrittsstutzen angeordnet, im wesentlichen exzentrisch entsprechend der Achse des Eintrittsstutzens ist, dadurch gekennzeichnet, daß gemeinsam einerseits zwischen dem festen Siebfilter (13) und dem Filterkörper (10) einerseits sein Innenraum diametral in zwei unterschiedliche Volumina (A, B) längs der Achsialebene (P) des die Achse (A2) enthaltenden Filterkörpers von dem Eintrittsstutzen (11) und der Achse (A3) des festen Siebfilters unterteilt ist, wobei jedes dieser Volumina (A, B) sich jeweils zu beiden Seiten des festen Siebfilters (13) vom Eintrittsstutzen (11) bis zu Rückgewinnungszonen für Kleinteile oder Rückstände (22A, 22B), diametral gegenüber dem Eintrittsstutzen (11) sich erstreckt und andererseits im festen Siebfilter (13) sich diametral entsprechend der gleichen Achsialebene (P) ein Stegblech (27) erstreckt.

2. Filter nach Anspruch 1, dadurch gekennzeichnet, daß auf der Seite des Eintrittsstutzens (11) die Unterteilung in zwei unterschiedliche Volumina (A, B) des Filterinnenraums durch ein Richtelement (23) mit zwei Beschauflungen (24A, 24B) sichergestellt ist, die, angrenzend an diesen Eintrittsstutzen (11) sich voneinander auf der Seite des festen Siebfilters (13) zu beiden Seiten der Achsialebene (P) des Filterkörpers (10) entfernen, welcher die Achse (A2) des Eintrittsstutzens (11) und die (A3) des festen Siebfilters (13) enthält.

3. Filter nach einem der Ansprüche 1 oder 2, dadurch gekennzeichnet, daß auf der dem Eintrittsstutzen (11) gegenüberliegenden Seite die Unterteilung in zwei unterschiedliche Volumina (A, B) des Innenraums des Filters sichergestellt wird durch ein Trennorgan (25, 25'), welches entsprechend der Achsialebene (P) des Filterkörpers (10) angeordnet ist, die die Achse (A2) des Eintrittsstutzens (11) und diejenige (A3) des festen Siebfilters (13) enthält.

4. Filter nach Anspruch 2 oder 3, zusammengenommen, dadurch gekennzeichnet, daß der Filterkörper (10) mit einer seitlichen Wand (14) und zwei Böden (16, 17), das Richtelement (23) sowie das Separatororgan (25, 25'), welches den Innenraum des Filters in zwei unterschiedliche Volumina (A, B) trennt, sich von einem dieser Böden (16, 17) zum anderen erstrecken.

5. Filter nach einem der Ansprüche 2 bis 4, dadurch gekennzeichnet, daß das Trenn- order Separatororgan ein einfacher Flansch (25) ist.

6. Filter nach einem der Ansprüche 2 bis 4, dadurch gekennzeichnet, daß das Separatororgan ein Richtelement (25') mit zwei Beschauflungen ist, die aneinander angrenzend auf der dem Eintrittsstutzen (11) gegenüberliegenden Seite sich voneinander auf der Seite des Siebfilters (13) zu beiden Seiten der Axialebene (P) des Filterkörpers (10) entfernen, welcher die Achse (A2) des Eintrittsstutzens (11) und diejenige (A3) des festen Siebfilters (13) enthält.

7. Filter nach einem der Ansprüche 1 bis 6, dadurch gekennzeichnet, daß für jedes der unterschiedlichen Volumina (A, B), die es aufweist, die Rückgewinnungszone für die Kleinteile oder Rückstände (22A, 22B) gegen die Seitenwandung (14) des Filterkörpers (10) vorspringt.

8. Filter nach einem der Ansprüche 1 bis 7, dadurch gekennzeichnet, daß eine Entleerungsleitung (30) für die eine und andere der Rückstands- oder Kleinteilerückgewinnungszonen (22A, 22B) der beiden unterschiedlichen Volumina (A, B), die es aufweist, vorgesehen ist.

9. Filter nach einem der Ansprüche 1 bis 8, in deren festem Siebfilter (13) axial ein Deflektor (33) angeordnet ist, der im wesentlichen kegelstumpfförmigen Querschnitt aufweist, der allmählich in Richtung des Austrittsstutzens (12) abnimmt, dadurch gekennzeichnet, daß an seinem dem Austrittsstutzen (12) abgelegenen Ende dieser Deflektor (33) einen Querschnitt hat, der kleiner als der des festen Siebfilters (13) ist.

10. Filter nach einem der Ansprüche 1 bis 9, dadurch gekennzeichnet, daß längs der Achse (A1) des Filterkörpers (10) sein Innenraum zwischen dem festen Siebfilter (13) und diesem Filterkörper (10) in wenigstens zwei Kammern (C1, C2) durch eine innere Trennwand (28) senkrecht zu dieser Achse (A1) unterteilt ist.

## Claims

1. A filter for industrial waters, of the type comprising a generally cylindrical filter body, having an intake conduit connected to the side wall of the filter body perpendicularly to the axis thereof and an axial outlet conduit, and a fixed strainer which, disposed in said filter body between the intake conduit and the outlet conduit, is generally eccentric along the axis of said intake conduit, characterised in that, jointly, on the one hand between the fixed strainer (13) and the filter body (10), the internal space thereof is diametrally divided into two separate volumes (A, B) along the axial plane (P) of the filter body containing the axis (A2) of the intake conduit (11) and the axis (A3) of the fixed strainer, each of said volumes (A, B) extending respectively on respective sides of the fixed strainer (13) from the intake conduit (11) to waste recovery zones (22A, 22B) which are diametrally opposite to the intake conduit (11) and, on the other hand, a partition portion (27) extends diametrally in the fixed strainer (13), along said axial plane (P).

2. A filter according to claim 1 characterised in that, at the side of the intake conduit (11), the internal space of the filter is divided into two separate volumes (A, B) by a directional element (23) comprising two vane means (24A, 24B) which, being joined at the side of the intake conduit (11), move away from each other at the side of the fixed strainer (13) on respective sides of the axial plane (P) of the filter body (10) which contains the axis (A2) of the intake conduit (11) and the axis (A3) of the fixed strainer (13).

3. A filter according to either one of claims 1 and 2 characterised in that, on the side opposite to the intake conduit (11), the internal space of the filter is divided into two separate volumes (A, B) by a separator member (25, 25') disposed along the axial plane (P) of the filter body (10) which contains the axis (A2) of the intake conduit (11) and the axis (A3) of the fixed strainer (13).

4. A filter according to claims 2 and 3 in combination characterised in that, the filter body (10) comprising a side wall (14) and two end portions (16, 17), the directional element (23) and the separator member (25, 25') which divide the internal space of the filter into two separate volumes (A, B) both extend from one of said end portions (16, 17) to the other.

5. A filter according to any one of claims 2 to 4 characterised in that the separator member is a simple flange (25).

6. A filter according to any one of claims 2 to 4 characterised in that the separator member is a directional element (25') comprising two vane means which, being joined at the side opposite to the intake conduit (11), move away from each other at the side of the fixed strainer (13) on respective sides of the axial plane (P) of the filter body (10) which contains the axis (A2) of said intake conduit (11) and the axis (A3) of said fixed strainer (13).

7. A filter according to any one of claims 1 to 6 characterised in that, for each of the separate volumes (A, B) that it comprises, the waste recovery zone (22A, 22B) projects in relation to the side wall (14) of the filter body (10).

8. A filter according to any one of claims 1 to 7 characterised in that the same discharge conduit (30) is provided for both of the waste recovery zones (22A, 22B) of the two separate volumes (A, B) that it comprises.

9. A filter according to any one of claims 1 to 8 wherein axially disposed in the fixed strainer (13) thereof is a generally frustoconical deflector (33) of a section which progressively decreases in the direction of the outlet conduit (12), characterised in that, at its end which is in opposite relationship to the outlet conduit (12), the section of said deflector (33) is less than that of the fixed strainer (13).

10. A filter according to any one of claims 1 to 9 characterised in that, along the axis (AI) of the filter body (10), the internal space thereof, between the fixed strainer (13) and said filter body (10), is divided into at least two compartments (C1, C2) by an internal partition (28) which is perpendicular to said axis (A1).

FIG.1

FIG.2